# EUROPÄISCHE PATENTSCHRIFT

(11) **EP 2 842 804 B1**
(45) Veröffentlichungstag und Bekanntmachung des Hinweises auf die Patenterteilung: **03.10.2018**
(21) Anmeldenummer: 13181972.4
(22) Anmeldetag: 28.08.2013
(51) Int. Cl.: B60P 7/08, B62D 25/20

(54) **Boden oder eine Wand eines Nutzfahrzeugs und Nutzfahrzeug mit einer Aufnahme für Ladungssicherungsmittel**
Base or a wall of an industrial vehicle and industrial vehicle with a holder for load securing equipment
Sol ou paroi d'un véhicule utilitaire et véhicule utilitaire doté d'un logement pour un moyen de sécurisation de charge

(43) Veröffentlichungstag der Anmeldung: 04.03.2015
(73) Patentinhaber: Schmitz Cargobull AG, 48341 Altenberge (DE)
(72) Erfinder: Wetter, Josef, 48341 Altenberge (DE); Stegemann, Georg, 48369 Saerbeck (DE)
(74) Vertreter: Cohausz & Florack

(56) Entgegenhaltungen:
- EP-A1- 0 654 374
- WO-A1-91/04883
- DE-A1- 2 637 499
- DE-A1- 4 226 886
- DE-A1-102007 016 015
- DE-U1- 20 213 745
- US-B1- 6 793 449

## Beschreibung

Die Erfindung betrifft einen Boden oder eine Wand, insbesondere Seitenwand oder Stirnwand, eines Nutzfahrzeugs, insbesondere eines Lastkraftwagens, Anhängers oder Sattelanhängers, mit einer Decklage, wobei in der Decklage wenigstens eine Aussparung vorgesehen ist und wobei in der Aussparung eine Aufnahme mit einem Befestigungsmittel zum Befestigen eines Ladungssicherungsmittels vorgesehen ist. Ferner betrifft die Erfindung ein Nutzfahrzeug, insbesondere Lastkraftwagen, Anhänger oder Sattelanhänger, mit einem solchen Boden und/oder wenigstens einer solchen Wand.

Nutzfahrzeuge der vorgenannten Art dienen vorzugsweise dem Gütertransport im öffentlichen Straßenverkehr und können hinsichtlich ihrer Aufbauten unterschieden werden. Man unterscheidet beispielsweise Planenaufbauten und Kofferaufbauten, die beide einen Laderaum definieren, insbesondere umschließen.

Bei Planenaufbauten sind wenigstens die Längsseiten des Laderaums durch Planen verschlossen. An der Stirnseite weisen Planenaufbauten typischerweise feste Stirnwände auf. Die Längsseiten können geöffnet werden, um beim Be- und Entladen Zugang zum Laderaum zu erhalten. Das Öffnen der Längsseiten ist bei sogenannten Curtainsider-Aufbauten besonders einfach, da bei diesen Aufbauten die Planen an den Längsseiten aufgeschoben werden können. Bei Planenaufbauten ist die wenigstens eine an den Längsseiten und bedarfsweise am Dach vorgesehene Plane an einer tragenden Struktur umfassend Rungen und Holme befestigt. Die Rungen können an den Längsseiten des Nutzfahrzeugaufbaus und im Falle von sogenannten Eckrungen in den Ecken des Nutzfahrzeugaufbaus vorgesehen sein. Die Rungen können zudem längs zum Nutzfahrzeug im Bereich des Dachs verlaufende Holme tragen. Bei Curtainsider-Aufbauten sind die Seitenwandplanen in den entsprechenden Holmen verschiebbar aufgehängt.

Kofferaufbauten weisen im Gegensatz zu den Planenaufbauten neben einer festen Stirnwand noch feste Seitenwände und ein festes Dach auf. Die Stirnwände und die Rückwände, von denen Letztere meist im Wesentlichen durch zwei Flügeltüren gebildet werden, können bei Planenaufbauten und Kofferaufbauten ähnlich aufgebaut sein. Die Seitenwände, die Stirnwand und das Dach von Kofferaufbauten werden meist durch Paneele gebildet, die zwei stabile Lagen aus Metall und/oder Kunststoff und dazwischen eine Kernschicht aus einem vorzugsweise geschäumten Kunststoff aufweisen. Zugang zum Laderaum kann bei Kofferaufbauten regelmäßig nur über die Rückwand erhalten werden. In Kofferaufbauten ist die Ladung im Regelfall gegenüber Feuchtigkeit geschützt, so dass Kofferaufbauten meist für den Transport von feuchtigkeitsempfindlichen Gütern, wie etwa Lebensmittel, verwendet werden. Die Kernschicht aus geschäumtem Kunststoff kann bedarfsweise in hohem Maße thermisch isolierend wirken, weshalb Kofferaufbauten zudem in der Regel für Kühltransporte wärmeempfindlicher Güter eingesetzt werden.

Bei anderen Nutzfahrzeugen kann ganz auf einen Aufbau verzichtet werden, der einen Laderaum umschließt. Nutzfahrzeuge umfassen jedoch typischerweise einen Boden, auf dem die Ladung aus zu transportierenden Gütern abgestellt wird. Der Boden weist hierzu eine Decklage auf, welche eine Ladefläche des Nutzfahrzeugs bereitstellt. Die Decklage besteht bei Planenaufbauten häufig aus einer Kernschicht aus Holz, die zum Schutz vor Feuchtigkeit und vorschnellem Abrieb eine Beschichtung etwa in Form einer Harzschicht aufweist. Bei Kofferaufbauten besteht die Deckschicht aus hygienischen Gründen meist aus Metall. Um dem Boden die nötige Tragkraft zu verleihen, kann die Decklage von Quer- und/oder Längsträgern oder anderweitig gestützt werden.

Bei Seitenwänden und Stirnwänden kann ebenfalls eine Decklage aus Holz vorgesehen sein, die bedarfsweise nach innen an den Laderaum grenzt und von außen durch eine Lage aus Metall und/oder Kunststoff verdeckt wird. Bei Seitenwänden und Stirnwänden kann aber auch die innere Lage aus Metall und/oder Kunststoff und/oder die Kernschicht als Decklage angesehen werden. Zur Decklage können grundsätzlich alle Schichten, ausgesuchte Sichten oder nur eine Schicht der Stirnwand und/oder Seitenwand gezählt werden.

Damit die Ladung während des Transports nicht verrutschen kann, muss die Ladung regelmäßig über Ladungssicherungsmittel gesichert werden. Solche Ladungssicherungsmittel können Zurrgurte, Stäbe, Querbalken, Netze oder dergleichen sein, die vor oder hinter der Ladung angeordnet werden können, um ein Verrutschen der Ladung nach vorne oder hinten zu verhindern. Alternativ oder zusätzlich können die Ladungssicherungsmittel aber auch über die Ladung hinweg verlaufen, um die Ladung bedarfsweise gleichzeitig gegenüber einem Verrutschen zur Seite, nach vorne und/oder hinten zu sichern.

In vielen Fällen ist es für eine zufriedenstellende Ladungssicherung wünschenswert, die Ladungssicherungsmittel am Boden und/oder einer Wand des Nutzfahrzeugs befestigen zu können. Grundsätzlich sollte der Boden und/oder die Wand eines Nutzfahrzeugs jedoch möglichst eben sein, so dass die Ladung flach auf den Boden aufgestellt und/oder der Boden problemlos mit Hubwagen oder Staplern befahren werden kann. Zudem sollten die Wände möglichst eben sein, damit die Ladung beim Be- und Entladen nicht beschädigt wird. Um diesem Erfordernis Rechnung zu tragen, weisen viele Nutzfahrzeuge Böden und/oder Wände mit Aussparungen in der Decklage auf, in denen Aufnahmen zum Befestigen von Ladungssicherungsmitteln aufgenommen sind. Die Aufnahmen umfassen dazu Befestigungsmittel etwa in Form von schwenkbaren Ösen, in die Ladungssicherungsmittel eingehängt werden können. Die Aufnahmen dienen insbesondere der Aufnahme von Verbindungsabschnitten von Ladungssicherungsmitteln etwa in Form von Haken.

Bei einigen bekannten Nutzfahrzeugen werden Aussparungen in Form von Bohrungen und zusätzlich in Form eines die Bohrungen verbindenden Kanals nahe der Ladefläche in den Boden eingebracht. Eine Lochleiste aus Metall kann in den Kanal eingelegt und mit dem Boden verschraubt sein, wobei die Löcher der Lochleiste über den Bohrungen angeordnet sind, um dort Ladungssicherungsmittel einzuhängen. Zudem ist es bekannt, Leisten zur Ladungssicherung in Seitenwände und Stirnwände einzulassen.

Bei anderen Nutzfahrzeugen ist der in der Aussparung aufgenommene Teil der Aufnahme über eine innerhalb der Decklage vorgesehene Verbindung in der Decklage gehalten. Entsprechende Nutzfahrzeuge sind beispielsweise aus der DE 26 37 499 A1, der DE 42 26 886 A1, der US 6 793 449 B1 und der EP 0 654 374 A1 bekannt.

Die bekannten Böden und Wände weisen je nach Bauart unterschiedliche Nachteile auf. Wenn recht große Aussparungen vorgesehen sind, wird dadurch der Boden bzw. die Wand erheblich geschwächt. Zudem sind einige Aufnahmen bekannt, die aufwendig zu montieren sind und/oder nur unzureichenden Auszugskräften standhalten.

Daher liegt der vorliegenden Erfindung die Aufgabe zugrunde, den Boden und/oder die Wand der eingangs genannten und zuvor näher beschriebenen Art derart auszugestalten und weiterzubilden, dass der Boden und/oder die Wand stabil und leicht zu fertigen ist sowie gleichzeitig hohe Auszugskräfte aufnehmen kann.

Diese Aufgabe ist bei einem Boden oder einer Wand gemäß Anspruch 1 gelöst.

Die Aufgabe ist ferner bei einem Nutzfahrzeug nach dem Oberbegriff von Anspruch 15 dadurch gelöst, dass der Boden und/oder die Wand nach einem der Ansprüche 1 bis 14 ausgebildet ist.

Erfindungsgemäß wird die Aufnahme also in der eigentlichen Aussparung und mithin über eine innerhalb der Decklage vorgesehene, vorzugsweise formschlüssige, kraftschlüssige und/oder stoffschlüssige, Verbindung in der Decklage gehalten. Es muss also keine Verbindung außerhalb der Aussparung vorgesehen werden, so dass die Montage der Aufnahme sehr einfach erfolgen kann. Außerdem kann die Aufnahme so sehr klein ausgeführt werden, so dass wenig Raum für die Aussparung benötigt wird. Die Aufnahme muss also nicht über die Oberseite der Decklage überstehen und zur Seite ragen, um die Aufnahme dort an der Decklage zu befestigen. Die Aufnahme muss auch nicht gegenüber der Decklage nach unten vorstehen, um die Aufnahme von der Rückseite der Decklage gegenüber einem Herausziehen aus der Decklage zu sichern. Daher kann die Aufnahme bei nur geringer Schwächung der Decklage im Boden oder in der Wand vorgesehen werden.

Bei der Wand handelt es sich in diesem Zusammenhang sowie im Folgenden stets insbesondere um eine Stirnwand und/oder eine Seitenwand eines Nutzfahrzeugs, insbesondere eines Nutzfahrzeugaufbaus. Die Wände können insbesondere eine an den Laderaum grenzende Lage aus Holz aufweisen, der die Decklage bildet. Die Decklage kann aber auch durch eine an den Laderaum grenzende Lage aus Metall oder Kunststoff gebildet sein. Die Decklage kann alternativ, und zwar insbesondere bei Kofferaufbauten für den Trocken- und/oder den Kühltransport, durch eine Lage, vorzugsweise Kernlage, aus geschäumtem Kunststoff oder durch die Gesamtheit aus einer solchen Lage aus geschäumtem Kunststoff und einer an den Laderaum grenzenden Lage aus Metall und/oder ungeschäumten Kunststoff, gebildet wird.

Die vorzugsweise formschlüssig, kraftschlüssig und/oder stoffschlüssig ausgebildete Verbindung zum Fixieren der Aufnahme in der Decklage kann wahlweise an wenigstens einer Außenseite und/oder an wenigstens einer Unterseite der Aufnahme vorgesehen sein. Als Unterseite der Aufnahme wird im Falle einer Wand analog zum Boden die vom Laderaum abgewandte Seite der Aufnahme verstanden. Die beschriebenen Vorteile werden im Falle der Unterseite erreicht, wenn die Verbindung unter dem Befestigungsmittel vorgesehen ist. Dies erlaubt insbesondere eine kompakte Bauform der Aufnahme. Zudem wird so das Befestigen von Ladungssicherungsmitteln am Befestigungsmittel nicht behindert. Ganz grundsätzlich steht trotz einer kompakten Bauform an wenigstens einer Unterseite und/oder an wenigstens einer Außenseite eine ausreichende Verbindungsfläche zur Verfügung, um eine in Auszugsrichtung sehr stabile Verbindung bereitzustellen, die folglich hohe Auszugskräfte aufnehmen kann. Im Übrigen kann die Aufnahme bedarfsweise problemlos und schnell in die Aussparung eingesteckt, eingeschlagen, eingepresst, eingedreht, eingeschraubt oder in der Aussparung festgeschraubt werden. Die Aufnahme kann alternativ oder zusätzlich zur Aufnahme eines Verbindungsmittels eines Ladungssicherungsmittels dienen.

Bei einer stoffschlüssigen Verbindung wird zwischen Aussparung und Aufnahme an wenigstens einer Außenseite und/oder Unterseite der Aufnahme ein Klebstoff eingebracht, der sich sowohl mit dem Material der Aufnahme als auch mit dem Material der Decklage verbindet. Im Falle einer formschlüssigen Verbindung greift vorzugsweise die Aufnahme innerhalb der Decklage in das Material der Decklage ein. Insbesondere führt dieses Eingreifen zu einem Formschluss in Auszugsrichtung, und zwar vorzugsweise jedenfalls überwiegend in Auszugsrichtung. Eine kraftschlüssige Verbindung kann an einer Außenseite der Aufnahme durch einen Presssitz der Aufnahme in der Aussparung erreicht werden. Um den Presssitz bereitzustellen, kann die Aufnahme in die Decklage eingeschlagen oder eingepresst werden. Die entsprechende Außenseite der Aufnahme kann gegebenenfalls profiliert sei, wobei die Profilierung gleichzeitig für einen Formschluss sorgen kann. Letzteres kann beispielsweise der Fall sein, wenn die Profilierung senkrecht zur Einschubrichtung der Aufnahme in die Aussparung vorgesehen ist. Wenn die Profilierung parallel zur Einschubrichtung der Aufnahme in die Aussparung ausgerichtet ist, kann eine jedenfalls im Wesentlichen kraftschlüssige Verbindung zwischen der Aufnahme und der Decklage bereitgestellt werden. An der Unterseite kann die kraftschlüssige Verbindung der Einfachheit und Wirksamkeit halber durch eine Schraubverbindung bereitgestellt werden. Dabei kann die Aufnahme einfach über eine separate Schraube in der Decklage fixiert werden.

Bei den während der Ladungssicherung auf die Aufnahme wirkenden Kräften kann es sich vornehmlich um Zugkräfte handeln. Dies gilt insbesondere bei der Verwendung von Zurrgurten zur Ladungssicherung. Die Zugkräfte können senkrecht zum Boden oder zur Wand ausgerichtet sein oder mit der Ladefläche oder der Wand einen mehr oder weniger spitzen Winkel einschließen. Die Zugkräfte neigen also grundsätzlich dazu, die Aufnahme aus dem Boden oder der Wand herauszuziehen, weshalb sie auch als Auszugskräfte bezeichnet werden. Die Richtung, in der die Zugkräfte wirken, wird folglich als Auszugsrichtung bezeichnet. Im Übrigen hat die Erfindung erkannt, dass entsprechende Aufnahmen verhältnismäßig klein ausgebildet werden können. Daher müssen in der Decklage keine großen Aussparungen vorgesehen werden, die die Decklage übermäßig schwächen würden.

Der Boden kann grundsätzlich aus unterschiedlichen Lagen ausgebildet sein, wobei die obere tragende und die Ladefläche bereitstellende Lage als die Decklage bezeichnet werden kann. Die Decklage stellt vorzugsweise eine möglichst ebene und einheitliche Ladefläche bereit. Bedarfsweise kann die Decklage selbst aus mehreren Lagen oder Schichten aufgebaut sein. Insbesondere kommt die Verwendung einer Kernlage oder Trägerschicht und einer wenigstens einseitig aufgebrachten Beschichtung in Frage. Dabei kann die Beschichtung insbesondere dem Schutz des Bodens bzw. der Decklage als solcher und/oder der Ladung dienen.

Auch eine Seitenwand und/oder eine Stirnwand kann aus unterschiedlichen Lagen aufgebaut sein. Dabei wird vorzugsweise die dem Laderaum zugewandte Lage oder meherere Lagen, die gemeinsam an den Laderaum grenzen als Decklage angesehen. Es kann aber bedarfsweise auch eine bestimmte andere oder mehrere andere Lagen der Wand als Decklage in Frage kommen. Die Decklage kann beispielsweise aus Holz, Metall, geschäumtem Kunststoff und/oder ungeschäumtem Kunststoff gebildet sein.

Bei einer ersten bevorzugten Ausgestaltung des Bodens oder der Wand weist die Aufnahme eine nach außen weisende Profilstruktur auf, und zwar vorzugsweise umfangsseitig. Dann kann die Aufnahme beispielsweise einfach und schnell in die Aussparung eingesteckt, eingeschlagen, eingedreht oder eingeschraubt werden. Außerdem kann über den Formschluss zwischen der nach außen weisenden Profilstruktur und dem angrenzenden Bereich des Bodens oder der Wand eine in Auszugsrichtung sehr stabile Verbindung bereitgestellt werden, die hohe Auszugskräfte aufnehmen kann. Unter einer nach außen weisenden Profilstruktur ist eine solche zu verstehen, die in Richtung des angrenzenden Bodens oder der Wand weist und/oder in diese Richtung wenigstens abschnittsweise vorsteht, um so einen Formschluss zu erzeugen. Die Profilstruktur ist folglich so profiliert, dass der Formschluss in der Auszugsrichtung der Aufnahme wirkt. Dies wird vorzugsweise dadurch erreicht, dass die Profilstruktur in wenigstens eine Richtung parallel zum Boden bzw. der Wand oder einer durch den Boden bzw. die Wand definierten Ebene nach außen vorsteht. Alternativ oder zusätzlich kann die Profilstruktur in wenigstens eine Richtung senkrecht zur Längserstreckung der Aussparung nach außen vorstehen, um so das Ausziehen der Aufnahme in Auszugsrichtung zu verhindern. Dabei bietet es sich jedoch insbesondere an, wenn die Längsrichtung der Aussparung senkrecht zu einer durch den Boden oder die Wand definierten Ebene verläuft. Die Profilstruktur kann beispielsweise eine Rändelstruktur, eine Rippenstruktur, eine Dornenstruktur oder eine Widerhakenstruktur darstellen. Mithin kann der Formschluss durch eine Struktur ähnlich des Griffabschnitts einer Rändelschraube, in Form von Rippen, in Form von Dornen und/oder in Form von Widerhaken gebildet werden. Derartige Profilstrukturen können in die angrenzenden Bereiche des Bodens oder der Wand eingreifen, um für einen Formschluss zu sorgen, ohne die entsprechenden Bereiche beim Einbringen der wenigstens einen Aufnahme in die wenigstens eine Aussparung zu stark zu schädigen.

Besonders bevorzugt ist an der Aufnahme eine nach außen weisende Profilstruktur in Form eines Außengewindes vorgesehen, um die Auszugskräfte zu erhöhen und das Montieren der Aufnahme zu erleichtern. Das Außengewinde kann leicht in den Boden oder die Wand eingedreht bzw. eingeschraubt werden, und zwar ohne das an das Außengewinde angrenzende Material des Bodens oder der Wand beim Eindrehen oder Einschrauben des Außengewindes erheblich zu schwächen. Dabei bietet es sich zudem an, wenn die Aufnahme wenigstens im Bereich des Außengewindes eine im Wesentlichen zylindrische Außenkontur aufweist. Alternativ oder zusätzlich bietet es sich an, wenn das Außengewinde ohne Unterbrechungen umlaufend um den Umfang der Aufnahme und/oder mehrgängig ausgebildet ist. Weiter bietet es sich an, wenn das Außengewinde wenigstens über einen Großteil der Ausdehnung der Aufnahme senkrecht zum Boden oder der Wand vorgesehen ist. Im Übrigen ist es besonders einfach, wenn die Aufnahme im Wesentlichen über die gesamte Ausdehnung der Aufnahme eine im Wesentlichen zylindrische Außenkontur aufweist.

Die Aufnahme kann alternativ oder zusätzlich in einer Lage aus Holz, aus geschäumten oder ungeschäumten Kunststoff und/oder aus Metall gehalten sein. Die Aufnahme kann leicht mittels der nach außen weisenden Profilstruktur, insbesondere mittels des Außengewindes, in das Holz, den Kunststoff oder das Metall eingebracht, insbesondere eingedreht, werden. Zudem sind diese Materialien stabil genug, um die Aufnahme auch bei hohen Auszugskräften sicher im Boden oder in der Wand zu fixieren. Unter dem Material Holz werden vorliegend neben massivem Holz auch Holzwerkstoffe verstanden, die unter Verwendung von Holz gefertigt werden. Es kommen beispielsweise Platten aus verleimten Holzfasern oder Holzspänen wie mitteldichte Faserplatten (MDF-Platten), hochdichte Faserplatten (HDF-Platten) oder Oriented-Strand-Boards (OSB-Platten) in Frage. Die Materialien sind kostengünstig verfügbar und weisen geeignete Materialeigenschaften auf. Die Lage aus Holz, Kunststoff und/oder Metall bildet vorzugsweise die Deckschicht des Bodens oder der Wand. Im Falle von Holz bietet sich insbesondere eine Harz- und/oder Lackschicht als Beschichtung an. Besonders bevorzugt ist dabei eine Schicht aus Phenol- und/oder Melamin-Harz, da eine solche Schicht sehr widerstandsfähig und wasserdicht ist.

Zum einfachen Befestigen eines Ladungssicherungsmittels kann die Aufnahme wenigstens eine Öffnung aufweisen, durch die ein Verbindungsabschnitt des Ladungssicherungsmittels, etwa in Form eines Hakens, in die Aufnahme eingeführt werden kann. Auf diese Weise kann auch erreicht werden, dass die Aufnahme nicht gegenüber der von der Bodenoberfläche gebildeten Ladefläche oder gegenüber der Wandinnenseite in den Laderaum hervorsteht, wodurch das Be- und Entladen behindert werden könnte.

Um ein Ladungssicherungsmittel einfach an der Aufnahme festlegen zu können, kann das wenigstens eine Befestigungsmittel in der Aufnahme vorgesehen sein. Dies hat den zusätzlichen Effekt, dass das Befestigungsmittel nicht gegenüber der Ladefläche hervorsteht und folglich das Be- und Entladen des Nutzfahrzeugs nicht nennenswert beeinträchtigt. Dabei kann die Zugänglichkeit des Befestigungsmittels besonders einfach gewährleistet werden, wenn das Befestigungsmittel über die Öffnung zugänglich ist.

Damit die Aufnahme einfach und kostengünstig ausgebildet werden kann, bietet es sich an, das wenigstens eine Befestigungsmittel in Form einer Hinterschneidung auszubilden. Dann kann zudem das Ladungssicherungsmittel in einfacher Weise formschlüssig an der Aufnahme festgelegt werden, indem das Ladungssicherungsmittel die Hinterschneidung, insbesondere in einer Richtung parallel zur Auszugsrichtung gesehen, hintergreift.

Die Aufnahme lässt sich einfach im Boden oder der Wand festlegen, insbesondere in den Boden oder die Wand einschrauben, wenn die Aufnahme einen Innenmehrkant aufweist. Die Aufnahme kann dann schnell und kostengünstig mittels eines entsprechenden Außenmehrkants im Boden oder in der Wand bzw. in der Aussparung des Bodens oder der Wand befestigt werden. Ganz besonders bevorzugt ist in diesem Zusammenhang ein Innenzwölfkant.

Da der Innenmehrkant einen inneren freien Querschnitt bildet, kann der Innenmehrkant vorzugsweise die Öffnung zum Einführen eines Verbindungsabschnitts des Ladungssicherungsmittels definieren und/oder umschließen. Dann kann das Ladungssicherungsmittel durch die Öffnung des Innenmehrkants in die Aufnahme eingeführt werden. Ein Innenzwölfkant ermöglicht einen großen inneren freien Querschnitt, so dass eine große Öffnung bereitgestellt werden kann, über die das Befestigungsmittel zugänglich ist.

Alternativ, insbesondere aber zusätzlich, kann das Befestigungsmittel, insbesondere die Hinterschneidung zum formschlüssigen Festlegen eines Ladungssicherungsmittels hinter dem Innenmehrkant ausgebildet sein. Dabei kann die Hinterschneidung von einem Vorsprung hinter dem Innenmehrkant gebildet werden, und zwar gesehen von der Ladefläche. Besonders einfach und kostengünstig ist es jedoch, wenn der Innenmehrkant selbst die Hinterschneidung definiert, beispielsweise dadurch, dass der Innenmehrkant im Vergleich mit dem sich weiter unten anschließenden, vorzugsweise zylindrisch ausgebildeten, Abschnitt der Aufnahme etwas nach innen vorsteht. Die Hinterschneidung kann bedarfsweise von einem Verbindungsabschnitt eines Ladungssicherungsmittels, etwa in Form eines Hakens, hintergriffen werden.

Zur Senkung des konstruktiven Aufwands ist die Aufnahme im Wesentlichen als Hohlkörper ausgebildet ist. Dabei bietet sich beispielsweise eine hülsenförmige Aufnahme an.

Um die Ladungssicherung je nach Beladungssituation des Nutzfahrzeugs in geeigneter Weise vornehmen zu können, ist es zweckmäßig, wenn eine Mehrzahl von untereinander beabstandeten Aufnahmen in der Decklage des Bodens oder der Wand vorgesehen ist. Dabei kann es weiter bevorzugt sein, wenn angrenzende Aufnahmen jeweils den gleichen Abstand zueinander aufweisen. So können in regelmäßigen Abständen Aufnahmepunkte für die Ladungssicherung bereitgestellt werden. Um das Sichern der Ladung weiter zu vereinfachen, können die Aufnahmen alternativ oder zusätzlich in wenigstens einer Reihe entlang des Bodens oder der Wand vorgesehen sein.

Insbesondere ist in diesem Zusammenhang die Anordnung der Aufnahmen entlang von zwei oder vier Reihen bevorzugt, um beispielsweise quer zur Ladefläche eine hinreichende Zahl von Aufnahmepunkten zur Ladungssicherung bereitzustellen. Die wenigstens eine Reihe kann dabei vorzugsweise in Längsrichtung des Bodens oder der Wand also beispielsweise parallel zu einer Längsseite des Bodens oder der Wand ausgerichtet sein. So können längs des Nutzfahrzeugs mehrere Aufnahmen zum Festlegen von Ladungssicherungsmitteln vorgesehen werden. Im Falle von mehreren Reihen ist es zur Bereitstellung einer gleichmäßigen Teilung weiter bevorzugt, wenn die Reihen parallel zueinander verlaufen.

Als besonders zweckmäßig haben sich bisher Aufnahmen erwiesen, die einen Außendurchmesser zwischen 15 mm und 50 mm aufweisen. Diese lassen sich noch leicht in den Boden oder in die Wand eindrehen und erlauben zudem hohe Auszugskräfte. Der entsprechende Kompromiss ist besonders günstig, wenn der Außendurchmesser zwischen 20 mm und 40 mm, insbesondere zwischen 25 mm und 35 mm, beträgt.

Alternativ oder zusätzlich kann es zu bevorzugten Ergebnissen führen, wenn die Höhe der Aufnahme zwischen 10 mm und 40 mm beträgt. Dann können die Aufnahmen tief genug im Boden oder in der Wand verankert werden, ohne dass zu große und tiefe Aussparungen in der Decklage erforderlich sind, welche die Stabilität der Decklage insgesamt schwächen würden. Ein entsprechender Kompromiss wird insbesondere erreicht, wenn die Höhe der Aufnahme, also die Länge der Aufnahme in einer Richtung senkrecht zur Ladefläche, zwischen 25 mm und 30 mm, vorzugsweise etwa 20 mm, beträgt.

Die Erfindung wird nachfolgend anhand einer lediglich Ausführungsbeispiele darstellenden Zeichnung näher beschrieben. In der Zeichnung zeigt
- Fig. 1: ein erfindungsgemäßes Nutzfahrzeug mit einem ersten erfindungsgemäßen Boden,
- Fig. 2: ein Detail des Bodens aus Fig. 1 in einer Schnittansicht senkrecht und längs zum Boden,
- Fig. 3: eine Aufnahme des Bodens aus Fig. 2 in einer perspektivischen Ansicht,
- Fig. 4: die Aufnahme aus Fig. 3 in einer Seitenansicht,
- Fig. 5: die Aufnahme aus Fig. 3 in einer Draufsicht von oben,
- Fig. 6: ein Detail eines zweiten erfindungsgemäßen Bodens in einer Schnittansicht senkrecht und längs zum Boden,
- Fig. 7: ein Detail eines dritten erfindungsgemäßen Bodens in einer Schnittansicht senkrecht und längs zum Boden,
- Fig. 8: ein Detail eines vierten erfindungsgemäßen Bodens in einer Schnittansicht senkrecht und längs zum Boden und
- Fig. 9: ein Detail eines fünften erfindungsgemäßen Bodens in einer Schnittansicht senkrecht und längs zum Boden.

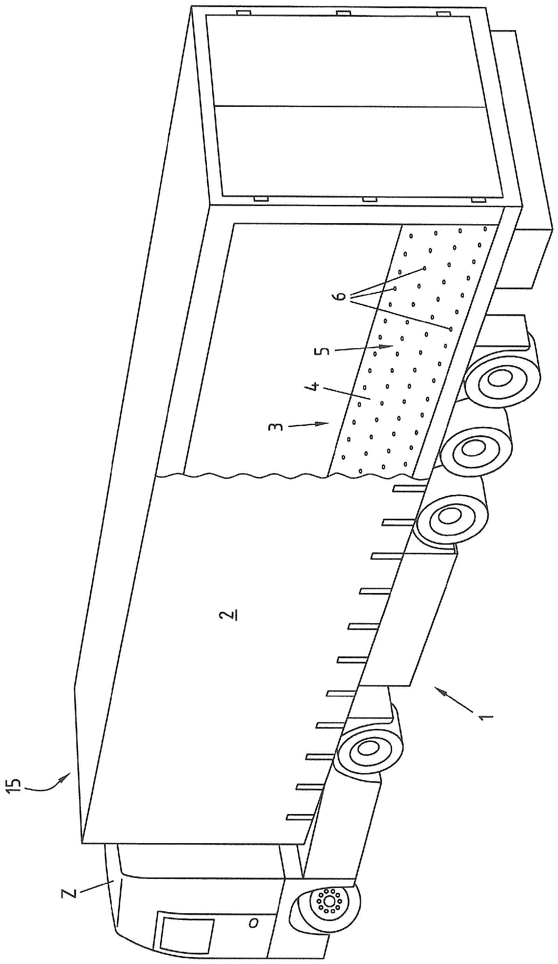

In der Fig. 1 ist ein von einem Zugfahrzeug Z gezogenes Nutzfahrzeug 1 in Form eines Sattelanhängers mit einem Planenaufbau dargestellt. Der Planenaufbau ist nach Art eines Curtainsider-Aufbaus mit aufschiebbaren Seitenplanen 2 ausgebildet und umschließt in seinem Inneren einen Laderaum zur Aufnahme von Ladung aus zu transportierenden Gütern. Der Laderaum weist eine Ladefläche 3 auf, die von einer Decklage 4 des Bodens 5gebildet wird. Der Boden 5 weist in vier parallelen Reihen baugleiche Aufnahmen 6 auf. Die Reihen sind dabei alle parallel zueinander und parallel zu einer Längsseite des Nutzfahrzeugs 1 ausgerichtet. Die benachbarten Aufnahmen 6 einer jeden Reihe sind stets im gleichen Abstand zueinander angeordnet.

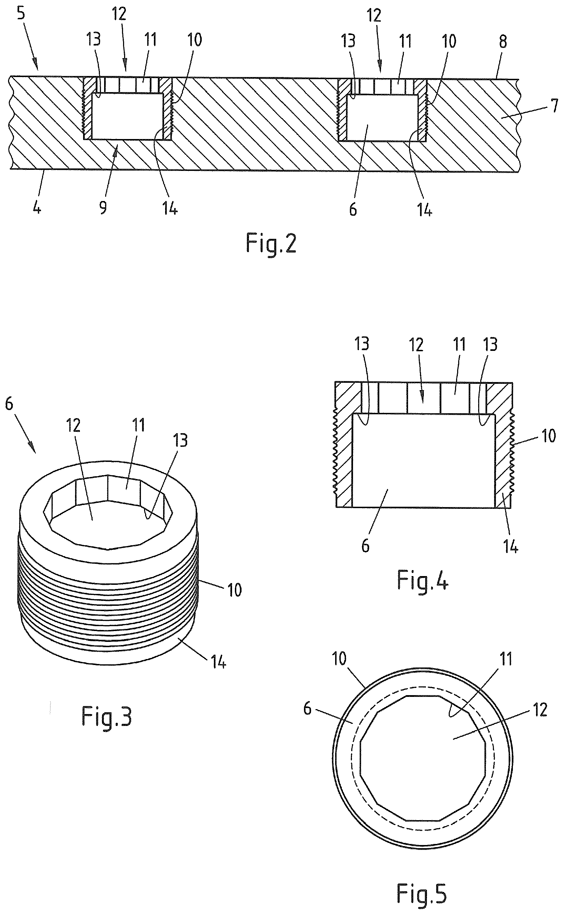

In der Fig. 2 ist ein Detail des Bodens 5 in einem Schnitt senkrecht zur Ladefläche 4 und mittig durch eine der Reihen von Aufnahmen 6 dargestellt. Die Decklage 4 weist eine Lage 7 aus einem Holzwerkstoff auf, der an seiner Oberseite mit einer Beschichtung 8 aus Melamin-Harz versehen ist. Im Bereich der Aufnahmen 6 sind in der Decklage 4 Aussparungen 9 in Form von Bohrungen vorgesehen. In diese Aussparungen 9 sind die Aufnahmen 6 eingedreht, die zur Befestigung von Ladungssicherungsmitteln verwendet werden können. Dabei greift eine nach außen weisende Profilstruktur 10 in Form eines Außengewindes in das Holzmaterial der Decklage 4 ein und sichert die Aufnahmen 6 formschlüssig gegenüber einem anschließenden Herausziehen, wenn an den Aufnahmen 6 eine Ladungssicherung festgelegt wird. Die Aufnahmen 6 sind beim dargstellten und insoweit bevorzugten Nutzfahrzeug 1 so weit in die Decklage 4 eingeschraubt, dass die Oberseiten 6 der Aufnahmen bündig mit der Ladefläche 3 abschließen. Nach unten schließen die Aufnahmen 6 an den Grund der Aussparungen 9 an.

Eine Aufnahme 6 des dargestellten und insoweit bevorzugten Bodens 5 ist in den Fig. 3 bis 5 in verschiedenen Ansichten dargestellt. Die Aufnahme 6 ist als Hohlkörper ausgebildet und weist eine hülsenförmige Gestalt auf. Umfangsseitig ist die Aufnahme 6 zylinderförmig geformt und mit einer nach außen weisenden Profilstruktur 10 in Form eines Außengewindes versehen, mit der die Aufnahme 6 in die Aussparung 9 im Holz des Bodens 5 eingeschraubt werden kann. Am oberen Ende der Aufnahme 6 weist diese einen Innenmehrkant 11 in Form eines Innenzwölfkants auf, in den zum Einschrauben der Aufnahme 6 in die Decklage 4 ein Außenzwölfkant eingesteckt werden kann. Der Innenmehrkant 11 definiert eine Öffnung 12 zum Einführen eines Verbindungsabschnitts eines Ladungssicherungsmittels. Unterhalb des Innenmehrkants 11 ist ein Befestigungsmittel 13 in Form einer Hinterschneidung vorgesehen, da der Innenmehrkant 11 nicht bis an den zylindrischen Abschnitt 14 der Aufnahme 6 heranreicht. Das Befestigungsmittel 13 in Form einer Hinterschneidung ist beim dargestellten und insoweit bevorzugten Nutzfahrzeug 1 zwar nur schmal ausgebildet. Dies ist allerdings zum formschlüssigen Festlegen eines Ladungssicherungsmittels ausreichend.

Der beispielsweise hakenförmig ausgebildete Verbindungsabschnitt des Ladungssicherungsmittels kann also durch die Öffnung 12 des Innenmehrkants 11 eingeführt und in dem Befestigungsmittel 13 in Form einer Hinterschneidung unterhalb des Innenmehrkants 11 eingehakt werden. Das Ladungssicherungsmittel wird dabei an der Aufnahme 6 festgelegt, wenn der Verbindungsabschnitt des Ladungssicherungsmittels nach oben und/oder zur Seite gezogen wird. Dabei können eine ganze Reihe bekannter und unterschiedlich ausgebildeter Ladungssicherungsmittel an der dargestellten und insoweit bevorzugten Aufnahme 6 festgelegt werden.

Beim dargestellten und insoweit bevorzugten Nutzfahrzeug 1 schließt der Innenmehrkant 11 mit seiner Oberseite bündig mit der Ladefläche 4 des Bodens 5 ab. Zudem ist die nach außen weisende Profilstruktur 10 in Form des Außengewindes bei der dargestellten und insoweit bevorzugten Aufnahme 6 nicht über die gesamte Höhe des zylindrischen Abschnitts 14 vorgesehen. An das obere und das untere Ende der Aufnahme schließen sich schmale Bereiche ohne Außengewinde an.

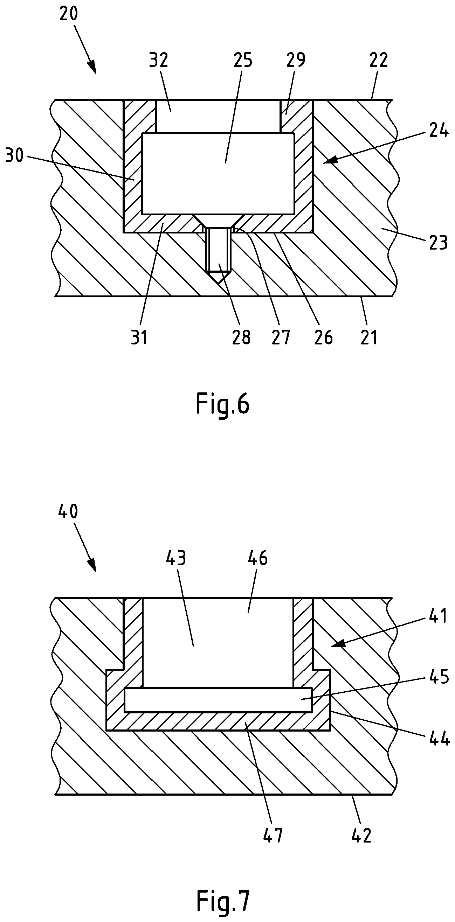

Das in der Fig.2 dargestellte Detail des Bodens 5 könnte auch ein Detail der Stirnwand 15 darstellen, da die Stirnwand 15 ebenfalls eine an den Laderaum angrenzende Decklage aus einem Holzwerkstoff aufweist, in dem Aufnahmen 6 in korrespondierenden Aussparungen 9 aufgenommen sind. Eine mehrfache Beschreibung der analogen Anordnung der Aufnahmen 6 im Boden 5 und in der Stirnwand 15 ist daher entbehrlich. Gleiches gilt im Prinzip auch für die in den Fig. 6 bis 9 dargestellten Ausführungsbeispiele.

In der Fig. 6 ist ein Boden 20 eines Nutzfahrzeugs mit einer Decklage 21 aus einer eine Beschichtung 22 aufweisenden Platte 23 aus Holz dargestellt. In der Decklage 21 ist eine Reihe von Aussparungen 24 dargestellt, in denen Aufnahmen 25 zur Aufnahme von Verbindungsmitteln von Ladungssicherungsmitteln gehalten sind. Dazu weisen die Aufnahmen 25 an der Unterseite 26 einen Kanal 27 auf, durch den eine Schraube 28 geführt ist, wobei der Schraubenkopf der Schraube 28 breiter ist als der Kanal 27, so dass der Schraubenkopf nicht durch den Kanal 27 hindurchrutschen kann. Der aus der Aufnahme 25 nach unten vorstehende Teil der Schraube 28 ist mit einem entsprechenden Gewinde in das Holz der Decklage 21 unterhalb der Aufnahme 25 eingeschraubt. Am oberen Ende der Aufnahme 25 weist diese ein Befestigungsmittel 29 in Form einer umlaufenden Hinterschneidung auf. Dem Befestigungsmittel 29 schließt sich nach unten ein hülsenförmiger Abschnitt 30 an, der am unteren Ende der Aufnahme 25 in einen die Aufnahme 25 im Wesentlichen verschließenden rückseitigen Abschluss 31 übergeht. Am oberen Ende der Aufnahme 25 ist eine Öffnung 32 zum Einführen eines Verbindungsmittels eines Ladungssicherungsmittels vorgesehen.

In der Fig. 7 ist ein weiterer Boden 40 mit einer in einer Aussparung 41 einer Decklage 42 vorgesehenen Aufnahme 43 dargestellt. Die Aufnahme 43 weist an ihrem unteren Ende einen Vorsprung 44 auf, der in einen Hinterschnitt in die Decklage 42 eingreift und so die Aufnahme 43 gegenüber einem Herausziehen aus dem Boden 40 sichert. Bei der Decklage 42 handelt es sich vorzugsweise um eine Decklage 42 aus Kunststoff. Die Aufnahme 43 kann so bereits bei der Fertigung der Decklage 42 in diese eingebracht werden. Alternativ kann die Decklage 42 und die Aufnahme 43 aber auch so aufeinander abgestimmt sein, dass die Aufnahme 43 ähnlich eines Bajonettverschlusses in die Aussparung 42 eingesteckt und anschließend in die endgültige Position gedreht werden kann. Der Einfachheit halber kann an der Innenseite des Vorsprungs 44 der Aufnahme 43 ein Befestigungsmittel 45 in Form einer umlaufenden Hinterschneidung zum Verbinden der Aufnahme 43 mit einem Ladungssicherungsmittel vorgesehen sein. Dann ist eine entsprechende Hinterschneidung am oberen Ende der Aufnahme 43 entbehrlich, so dass die Aufnahme 43 und die Aussparung 41 dort schmaler ausgeführt sein und dennoch eine hinreichend große Öffnung 46 bereitstellen können. Bei der dargestellten und insoweit bevorzugten Aufnahme 43 ist am unteren Ende ein Anschluss 47 vorgesehen.

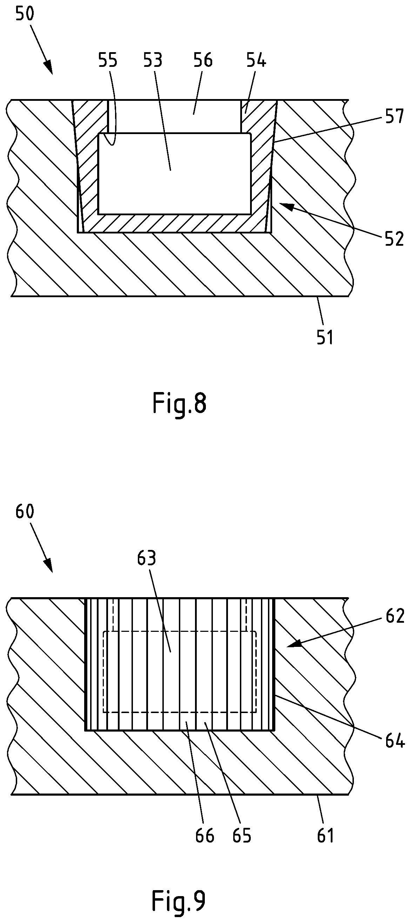

In der Fig. 8 ist ein Boden 50 mit einer Decklage 51 aus Holz oder Metall dargestellt, in die eine Aussparung 52 in Form einer Bohrung eingelassen ist. In der Aussparung 52 ist eine Aufnahme 53 zum Festlegen von Ladungssicherungsmitteln vorgesehen. Die Aufnahme 53 weist eine konische nach unten zulaufende Kontur auf. Der Durchmesser der ursprünglich vorgesehenen Aussparung 52 ist so bemessen, dass er größer als der Durchmesser der Aufnahme 53 am unteren Ende und kleiner als der Durchmesser der Aufnahme 53 am oberen Ende ist. Deshalb kann die Aufnahme 53 in die Aussparung 52 eingeschlagen oder eingepresst werden, um an der Außenseite 57 mit der Aussparung 52 eine kraftschlüssige Verbindung in Form eines Presssitzes bereitzustellen. Am oberen Ende der Aufnahme 53 ist ein umlaufender nach innen vorstehender Rand 54 vorgesehen, der ein Befestigungsmittel 55 in Form einer Hinterschneidung bereitstellt. Der Rand umfasst dabei eine Öffnung 56 durch die ein Verbindungsmittel eines Ladungssicherungsmittels in die Aufnahme 53 eingeführt werden kann, um am Rand 54 eingehakt zu werden. Die dargestellt und insoweit bevorzugte Aufnahme 53 ist rotationssymmetrisch zu einer Achse im Wesentlichen senkrecht zum Boden 50 vorgesehen. Die Aufnahme 53 könnte jedoch auch einen mehreckigen, insbesondere viereckigen Querschnitt in einer Ebene parallel zur Decklage 51 aufweisen.

In der Fig. 9 ist ein Boden 60 mit einer Decklage 61 dargestellt, in der eine Aussparung 62 vorgesehen ist. In der Aussparung 62 ist eine Aufnahme 63 aufgenommen. Die Aufnahme 63 weist an ihrer Außenseite 64 umlaufend und durch Nuten 65 zueinander beabstandete Rippen 66 auf, die im Wesentlichen senkrecht zu einer Ebene parallel zur Decklage 61 ausgerichtet sind. Der Durchmesser der ursprünglich in der Decklage 61 vorgesehenen Aussparung 62 ist dabei etwas geringer als der Außendurchmesser der Aufnahme 63 umfassend die Rippenstruktur aber groß genug, um die Aufnahme 63 in die ursprüngliche Aussparung 62 einpressen zu können. Durch das Einpressen der Aufnahme 63 in die Aussparung 62 wird folglich ein kraftschlüssiger Presssitz der Aufnahme 63 in der Decklage 61 bzw. der Aussparung 62 erzeugt. Zudem ist die Aufnahme 63 so verdrehsicher in der Decklage 61 gehalten. Der innere Bereich der Aufnahme 63 ist dabei analog zu den Aufnahmen 25,53 gemäß Fig. 6 und 8 ausgebildet.

## Patentansprüche

1. Boden (5,20,40,50,60) oder Wand, insbesondere Stirnwand (15) oder Seitenwand, eines Nutzfahrzeugs (1), insbesondere eines Lastkraftwagens, Anhängers oder Sattelanhängers, mit einer Decklage (4,21,42,51,61), wobei in der Decklage (4,21,42,51,61) wenigstens eine Aussparung (9,24,41,52,62) vorgesehen ist, wobei in der Aussparung (9,24,41,52,62) eine Aufnahme (6,25,43,53,63) mit einem Befestigungsmittel (13,29,45,55) zum Befestigen eines Ladungssicherungsmittels vorgesehen ist, wobei der in Aussparung (9,24,41,52,62) aufgenommene Teil der Aufnahme (6,25,43,53,63) über eine innerhalb der Decklage (4,21,42,51,61) vorgesehene Verbindung in der Decklage (4,21,42,51,61) gehalten ist und wobei die Verbindung wenigstens abschnittsweise an einer Außenseite (57,64) der Aufnahme (6,43,53,63) vorgesehen ist und/oder an einer Unterseite (26) der Aufnahme (25) unterhalb des Befestigungsmittels (29) vorgesehen ist und wobei die Aufnahme (6,25,43,53,63) wenigstens eine Öffnung (12,32,46,56) zum Einführen eines Verbindungsabschnitts des Ladungssicherungsmittels aufweist, **dadurch gekennzeichnet, dass** das wenigstens eine Befestigungsmittel (13,29,45,55) in Form einer die wenigstens eine Öffnung umlaufenden Hinterschneidung zum formschlüssigen Festlegen eines Ladungssicherungsmittels ausgebildet ist.

2. Boden oder Wand nach Anspruch 1,
**dadurch gekennzeichnet, dass** die Aufnahme (6,43) wenigstens abschnittsweise eine, vorzugsweise umfangsseitig, nach außen weisende Profilstruktur (10) aufweist und über die Profilstruktur (10) formschlüssig im Boden (5,40) oder in der Wand gehalten ist.

3. Boden oder Wand nach Anspruch 2,
**dadurch gekennzeichnet, dass** die nach außen weisende Profilstruktur (10) als Außengewinde ausgebildet ist.

4. Boden oder Wand nach Anspruch 1 oder 2,
**dadurch gekennzeichnet, dass** die Decklage (4,21,42,51,61) aus Holz, Kunststoff und/oder aus Metall gefertigt ist.

5. Boden oder Wand nach einem der Ansprüche 1 bis 4,
**dadurch gekennzeichnet, dass** das wenigstens eine Befestigungsmittel (13,29,45,55) in der Aufnahme (6,25,43,53,63) vorgesehen und, vorzugsweise, über die Öffnung (12,32,46,56) zugänglich ist.

6. Boden oder Wand nach einem der Ansprüche 1 bis 5,
**dadurch gekennzeichnet, dass** die Aufnahme (6) einen Innenmehrkant (11), vorzugsweise einen Innenzwölfkant, zum Eindrehen der Aufnahme (6) in den Boden (5) oder in die Wand aufweist.

7. Boden oder Wand nach Anspruch 6,
**dadurch gekennzeichnet, dass** der Innenmehrkant (11) die Öffnung (12) zum Einführen von Verbindungsabschnitten von Ladungssicherungsmitteln definiert.

8. Boden oder Wand nach Anspruch 6 oder 7,
**dadurch gekennzeichnet, dass** das Befestigungsmittel (13) zum fomschlüssigen Festlegen eines Ladungssicherungsmittels hinter dem Innenmehrkant (11) ausgebildet ist, vorzugsweise von dem Innenmehrkant (11) definiert wird.

9. Boden oder Wand nach einem der Ansprüche 1 bis 8,
**dadurch gekennzeichnet, dass** die Aufnahme (6,25,43,53,63) im Wesentlichen als Hohlkörper, insbesondere hülsenförmig, ausgebildet ist.

10. Boden oder Wand nach einem der Ansprüche 1 bis 9,
**dadurch gekennzeichnet, dass** eine Mehrzahl von untereinander, vorzugsweise gleichmäßig, beabstandeten Aufnahmen (6,25,43,53,63), vorzugsweise in wenigstens einer Reihe längs des Bodens (5) oder der Wand, vorgesehen sind.

11. Boden oder Wand nach einem der Ansprüche 1 bis 10,
**dadurch gekennzeichnet, dass** die Aufnahme (6,25,43,53,63) einen Außendurchmesser aufweist und dass der Außendurchmesser zwischen 15 mm und 50 mm, vorzugsweise zwischen 20 mm und 40 mm, insbesondere zwischen 25 mm und 35 mm, beträgt.

12. Boden oder Wand nach einem der Ansprüche 1 bis 11,
**dadurch gekennzeichnet, dass** die Höhe der Aufnahme (6,25,43,53,63) zwischen 10 mm und 40 mm, vorzugsweise zwischen 25 mm und 30 mm, insbesondere etwa 20 mm, beträgt.

13. Nutzfahrzeug (1), insbesondere Lastkraftwagen, Anhänger oder Sattelanhänger, mit einem Boden (5,20,40,50,60) und/oder wenigstens einer Wand, insbesondere Seitenwand und/oder Stirnwand (15) zum Transportieren von Ladung,
**dadurch gekennzeichnet, dass** der Boden (5,20,40,50,60) und/oder die wenigstens eine Wand nach einem der Ansprüche 1 bis 12 ausgebildet ist.

## Claims

1. Floor (5, 20, 40, 50, 60) or wall, in particular end wall (15) or side wall, of a utility vehicle (1), in particular of a lorry, trailer or semi-trailer, having a covering layer (4, 21,42, 51, 61), wherein at least one recess (9, 24, 41, 52, 62) is provided in the covering layer (4, 21, 42, 51, 61), wherein a receiving member (6, 25, 43, 53, 63) having a securing means (13, 29, 45, 55) for securing a load securing means is provided in the recess (9, 24, 41, 52, 62), wherein the portion of the receiving member (6, 25, 43, 53, 63) which is received in the recess (9, 24, 41, 52, 62) is retained in the covering layer (4, 21, 42, 51, 61) by means of a connection which is provided within the covering layer (4, 21,42, 51, 61), and wherein the connection is provided at least partially on an outer side (57, 64) of the receiving member (6, 43, 53, 63) and/or is provided on a lower side (26) of the receiving member (25) below the securing means (29), and wherein the receiving member (6, 25, 43, 53, 63) has at least one opening (12, 32, 46, 56) for introducing a connection portion of the load securing means,
**characterised in that**
the at least one securing means (13, 29, 45, 55) is constructed in the form of an undercut which extends around at least one opening for the positive-locking securing of a load securing means.

2. Floor or wall according to Claim 1,
**characterised in that**
the receiving member (6, 43) has at least partially a profile structure (10) which is directed outwards, preferably at the peripheral side, and is retained via the profile structure (10) in a positive-locking manner in the floor (5, 40) or in the wall.

3. Floor or wall according to Claim 2,
**characterised in that**
the outwardly directed profile structure (10) is constructed as an outer thread.

4. Floor or wall according to Claim 1 or 2,
**characterised in that**
the covering layer (4, 21, 42, 51, 61) is produced from wood, plastics material and/or from metal.

5. Floor or wall according to any one of Claims 1 to 4,
**characterised in that**
the at least one securing means (13, 29, 45, 55) is provided in the receiving member (6, 25, 43, 53, 63) and is preferably accessible via the opening (12, 32, 46, 56).

6. Floor or wall according to any one of Claims 1 to 5,
**characterised in that**
the receiving member (6) has an inner polygonal socket (11), preferably an inner bi-hexagonal socket, for screwing the receiving member (6) into the floor (5) or the wall.

7. Floor or wall according to Claim 6,
**characterised in that**
the inner polygonal socket (11) defines the opening (12) for introducing connection portions of load securing means.

8. Floor or wall according to Claim 6 or 7,
**characterised in that**
the securing means (13) is constructed for securing a load securing means in a positive-locking manner behind the inner polygonal socket (11), preferably is defined by the inner polygonal socket (11).

9. Floor or wall according to any one of Claims 1 to 8,
**characterised in that**
the receiving member (6, 25, 43, 53, 63) is constructed substantially as a hollow member, in particular in a sleeve-like manner.

10. Floor or wall according to any one of Claims 1 to 9,
**characterised in that**
a plurality of receiving members (6, 25, 43, 53, 63) which are spaced apart from each other, preferably in a uniform manner, are provided, preferably in at least one row along the floor (5) or the wall.

11. Floor or wall according to any one of Claims 1 to 10,
**characterised in that**
the receiving member (6, 25, 43, 53, 63) has an outer diameter and **in that** the outer diameter is between 15 mm and 50 mm, preferably between 20 mm and 40 mm, in particular between 25 mm and 35 mm.

12. Floor or wall according to any one of Claims 1 to 11,
**characterised in that**
the height of the receiving member (6, 25, 43, 53, 63) is between 10 mm and 40 mm, preferably between 25 mm and 30 mm, in particular approximately 20 mm.

13. Utility vehicle (1), in particular lorry, trailer or semi-trailer, having a floor (5, 20, 40, 50, 60) and/or at least one wall, in particular side wall and/or end wall (15), for transporting a load,
**characterised in that**
the floor (5, 20, 40, 50, 60) and/or the at least one wall is/are constructed in accordance with any one of Claims 1 to 12.

## Revendications

1. Sol (5, 20, 40, 50, 60) ou paroi, en particulier paroi frontale (15) ou paroi latérale, d'un véhicule utilitaire (1), en particulier d'un poids lourd, d'une remorque ou d'une semi-remorque, pourvu d'une couche de revêtement (4, 21, 42, 51, 61), où l'on prévoit dans la couche de revêtement (4, 21, 42, 51, 61) au moins une cavité (9, 24, 41, 52, 62) et où l'on prévoit dans la cavité (9, 24, 41, 52, 62) un logement (6, 25, 43, 53, 63) avec un élément de fixation (13, 29, 45, 55) pour la fixation d'un moyen de sécurisation de charge, où la partie du logement (6, 25, 43, 53, 63) logée dans la cavité (9, 24, 41, 52, 62) est maintenue, par un raccordement prévu à l'intérieur de la couche de revêtement (4, 21, 42, 51, 61), dans la couche de revêtement (4, 21, 42, 51, 61) et que l'on prévoit le raccordement, au moins par sections, sur un côté extérieur (57, 64) du logement (6, 43, 53, 63) et/ou sur un côté inférieur (26) du logement (25) en-dessous de l'élément de fixation (29) et où le logement (6, 25, 43, 53, 63) présente au moins une ouverture (12, 32, 46, 56) pour l'introduction d'un partie de raccordement du moyen de sécurisation de charge,
**caractérisé en ce que**
le au moins un élément de fixation (13, 29, 45, 55) est conçu en forme d'échancrure entourant la au moins une ouverture pour la fixation, par liaison de forme, d'un moyen de sécurisation de charge.

2. Sol ou paroi selon la revendication 1,
**caractérisé en ce que**
le logement (6, 43) présente, au moins par sections, une structure profilée (10) orientée vers l'extérieur, de préférence du côté périphérique, et est maintenu, par liaison de forme, par la structure profilée (10) dans le sol (5, 40) ou dans la paroi.

3. Sol ou paroi selon la revendication 2,
**caractérisé en ce que**
la structure profilée (10) orientée vers l'extérieur est conçue en tant que filetage extérieur.

4. Sol ou paroi selon la revendication 1 ou 2,
**caractérisé en ce que**
la couche de revêtement (4, 21, 42, 51, 61) est fabriquée en bois, matière synthétique et/ou métal.

5. Sol ou paroi selon l'une des revendications 1 à 4,
**caractérisé en ce que**
l'on prévoit le au moins un élément de fixation (13, 29, 45, 55) dans le logement (6, 25, 43, 53, 63) et qu'il est, de préférence, accessible à travers l'ouverture (12, 32, 46, 56).

6. Sol ou paroi selon l'une des revendications 1 à 5,
**caractérisé en ce que**
le logement (6) présente une empreinte polygonale en creux (11), de préférence une empreinte polygonale en creux à 12 sommets et côtés, pour le vissage du logement (6) dans le sol (5) ou dans la paroi.

7. Sol ou paroi selon la revendication 6,
**caractérisé en ce que**
l'empreinte polygonale en creux (11) définit l'ouverture (12) pour l'introduction des parties de raccordement de moyens de sécurisation de charge.

8. Sol ou paroi selon la revendication 6 ou 7,
**caractérisé en ce que**
l'élément de fixation (13) est conçu pour la fixation, par liaison de forme, d'un moyen de sécurisation de charge derrière l'empreinte polygonale en creux (11), de préférence il est défini par l'empreinte polygonale en creux (11).

9. Sol ou paroi selon l'une des revendications 1 à 8,
**caractérisé en ce que**
le logement (6, 25, 43, 53, 63) est conçu essentiellement en tant que corps creux, en particulier en forme de douille.

10. Sol ou paroi selon l'une des revendications 1 à 9,
**caractérisé en ce que**
l'on prévoit une multitude de logements (6, 25, 43, 53, 63) mutuellement et, de préférence, uniformément espacés, de préférence dans au moins une rangée le long du sol (5) ou de la paroi.

11. Sol ou paroi selon l'une des revendications 1 à 10,
**caractérisé en ce que**
le logement (6, 25, 43, 53, 63) présente un diamètre extérieur et que le diamètre extérieur se situe entre 15 mm et 50 mm, de préférence entre 20 mm et 40 mm, en particulier entre 25 mm et 35 mm.

12. Sol ou paroi selon l'une des revendications 1 à 11,
**caractérisé en ce que**
la hauteur du logement (6, 25, 43, 53, 63) se situe entre 10 mm et 40 mm, de préférence entre 25 mm et 30 mm, en particulier environ 20 mm.

13. Véhicule utilitaire (1), en particulier poids lourd, remorque ou semi-remorque, pourvu d'un sol (5, 20, 40, 50, 60) et/ou d'au moins une paroi, en particulier une paroi latérale et/ou une paroi frontale (15) pour le transport de charges,
**caractérisé en ce que**
le sol (5, 20, 40, 50, 60) et/ou la au moins une paroi sont conçus selon l'une des revendications 1 à 12.
